(19)

**Europäisches Patentamt**
**European Patent Office**
**Office européen des brevets**

(11) **EP 1 401 077 B1**

(12) **EUROPEAN PATENT SPECIFICATION**

(45) Date of publication and mention
of the grant of the patent:
**07.03.2012  Bulletin 2012/10**

(51) Int Cl.:
***H02H 11/00*** *(2006.01)*

(21) Application number: **03020924.1**

(22) Date of filing: **16.09.2003**

(54) **A circuit for protection against polarity reversal in the supply of an electric circuit**

Verpolschutzschaltung für die Stromversorgung einer elektrischen Schaltung

Circuit de protection contre les inversions de polarité d'alimentation d'un circuit électrique

(84) Designated Contracting States:
**DE ES FR GB SE**

(30) Priority: **17.09.2002  IT TO20020805**

(43) Date of publication of application:
**24.03.2004  Bulletin 2004/13**

(73) Proprietor: **Magneti Marelli S.p.A.**
**20011 Corbetta (MI) (IT)**

(72) Inventors:
• **De La Pierre, Piero**
**10014 Caluso (Torino) (IT)**

• **Nepote, Andrea**
**10131 Torino (IT)**
• **Lorusso, Giuseppe**
**10139 Torino (IT)**

(74) Representative: **Deambrogi, Edgardo**
**Jacobacci & Partners S.p.A.**
**Corso Emilia 8**
**10152 Torino (IT)**

(56) References cited:
**US-A- 5 764 465**

**Description**

The present invention relates generally to the supply of an electric circuit and more specifically a circuit for protection against polarity reversal of the supply.

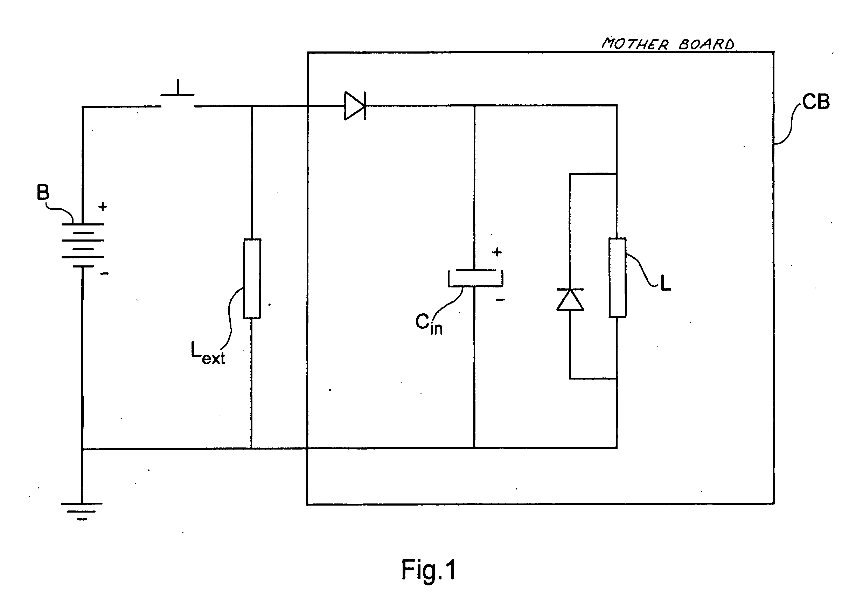

The classic solution universally adopted consists in the use of a common diode disposed in series with a battery terminal. In the case of protection to circuits formed on a mother board, as illustrated in Figure 1, the diode constitutes the necessary input stage thereof immediately downstream of the supply terminals.

This protection diode, as well as preserving the circuit downstream from polarity reversals caused by wiring errors, also intervenes during sporadic interruptions in supply which can occur for durations of about one millisecond, to safeguard the input capacitance of the board from discharge in configurations in which other external loads are connected to the battery in parallel with the board.

In the case of polarity reversals, the magnitude of the leakage current of the diode, which flows from the board towards the battery in these conditions, is a function of temperature, but is still of the order of few nanoamperes.

In the case of supply interruptions (battery blackouts), in the absence of protection the integral over time of the reverse current represents the quantity of electric charge transferred by the input capacitors of the board to the external loads. This quantity is negligible for a diode, which is an intrinsically unidirectional device.

The prior art arrangement has two disadvantages when the input current to the load is high, of the order of several amperes. Firstly, the power generated, given by the product of the direct current and the forward biasing voltage is rather high, so as to lead easily to overheating of the diode and the environment in which the motherboard is enclosed. In the second place, the voltage drop across the terminals of the forward biased diode - which for a silicon diode through which high currents flow reaches 1.5 volts - limits the minimum voltage admissible across the terminals of the battery for a correct operation of the load supplied.

In automotive applications, upon starting, the battery voltage of the vehicle can fall to 6 volts and the further voltage drop which is established across the terminals of the diode in the input stage of the board means that a lower voltage of the order of 4.5 volts is present at a possible voltage regulator stage present on the board, arranged to provide a regulated output voltage of 5 volts, which generates a system reset signal. For a voltage regulator formed by means of a DC/DC converter this would have to be configured as a voltage divider/booster, thereby increasing the costs and complexity of the circuit.

An alternative known solution, although more expensive, consists in the use of a Schottky diode which causes a forward voltage drop across the terminals not greater than 0.5-0.6 volts.

The magnitude of the reverse saturation current of the diode, which current would flow from the board towards the battery in conditions of polarity reversal, is a function of the applied voltage and the temperature, and can vary from values lower than microamps up to tens of milliamps.

In telematics applications on board motor vehicles a current of 3-3.2 amps is typically supplied and the dissipation produced by a Schottky protection diode is therefore of the order of 1.6 Watt, which is a considerable value such as to require an accurate mounting of the diode and use of a heat sink.

Considering a reasonable coefficient of thermal resistance (junction-environment) of 39°C/W calculated with reference to a Schottky diode of standard dimensions, the maximum temperature supportable by the junction - given by the sum of the contribution due to the ambient temperature and the contribution by Joule effect-can be indicated as:

$$T_{MAX}=T_A+62°C$$

For a maximum temperature of 150°C this involves an ambient temperature operating limit in the vicinity of the motherboard of about 88°C. These values are close to the typical operating limits, since such a temperature value can easily be reached depending on the heat dissipation capacity of the protective casing of the board. It is possible to imagine, for example, cases in which the ambient temperature in the engine compartment reaches and exceeds 85°C.

Both the arrangements described do not therefore make it possible to achieve adequate performance for the uses envisaged in the automotive field. The silicon diode reduces the reverse current to the minimum, but when high currents circulate in it, it presents an excessive heating. The Schottky diode offers improved performance from the thermal point of view but allows the flow of a reverse current of several orders of magnitude greater than that of a typical traditional diode.

US 5,764,465 discloses an electronic circuit arrangement having polarity reversal protection by means of a MOS field-effect transistor in conjunction with bipolar transistors, wherein polarity reversal protection is realized by the drain-source path of the MOSFET transistor. The arrangement is however not optimized in terms of voltage drop across said MOSFET transistor and the switching times thereof.

The present invention aims to provide a circuit solution which solves the previously explained problems in terms of efficiency and functionality without increasing the costs thereof.

In particular, it seeks to achieve the objective of providing a protection circuit of the type disclosed in US 5,764,465, the functionality of which is not compromised if currents of higher values, of the order of 5 amps are supplied, and for use in environments which can reach temperatures equal to or greater than 100°C. It further seeks to achieve the objective of providing a circuit which has a reduced voltage drop so as to be usable even in cases of a fall in the voltage available from the battery.

Conditions of the above indicated type occur, for example, in motor vehicle control units supplied by conventional 12 volt batteries and enclosed within a plastics casing.

According to the present invention these objects are achieved by a protection circuit having the characteristics set out in claim 1.

Particular embodiments of the invention are defined in the dependent claims.

In summary, the present invention is based on the principle of providing a protection circuit by replacing the diode with a MOSFET power transistor, and in particular a p-channel transistor, and associated driving circuit so as to reduce the voltage drop across its terminals to values of the order of 100 mV. The invention is characterised by the provision of an unbalancing resistance in the MOSFET driving circuit whose value is chosen with a view to balancing the requirements for rapid switching times of the MOSFET and low voltage drop across its terminals when working, as well as reducing heat dissipation of the protection circuit as a whole.

The choice of a p-channel MOSFET transistor is the most convenient to minimise the number of components of the driving circuit since otherwise it would require a gate voltage greater than the battery voltage, with consequent necessity to use an additional voltage boost circuit.

The MOSFET is controlled to conduct when the input voltage has the correct polarity and the current has the correct direction. On the other hand, it is switched off in the case of reversal of voltage or current.

Advantageously the arrangement according to the invention makes it possible to perform both the functions of a traditional diode: to achieve protection from polarity reversal and prevent discharge of the input capacitor towards external loads in parallel when short supply interruptions occur.

Further characteristics and advantages of the invention will be explained in more detail in the following detailed description of one embodiment, given by way of non-limitative example, with reference to the attached drawings, in which:

Figure 1 shows a traditional supply configuration of a circuit formed on a board according to the prior art; and
Figure 2 is a circuit diagram of the protection circuit forming the subject of the invention.

With reference to Figure 1, a circuit board - for example a board incorporating an on-board vehicle control unit and received in a protective casing of plastics material - is indicated CB. This board includes a capacitive input stage $C_{in}$ whilst the reference L generally indicates internal loads and circuits. A battery B is provided to supply the loads L disposed on the board and other external loads $L_{ext}$, each via a respective protection circuit.

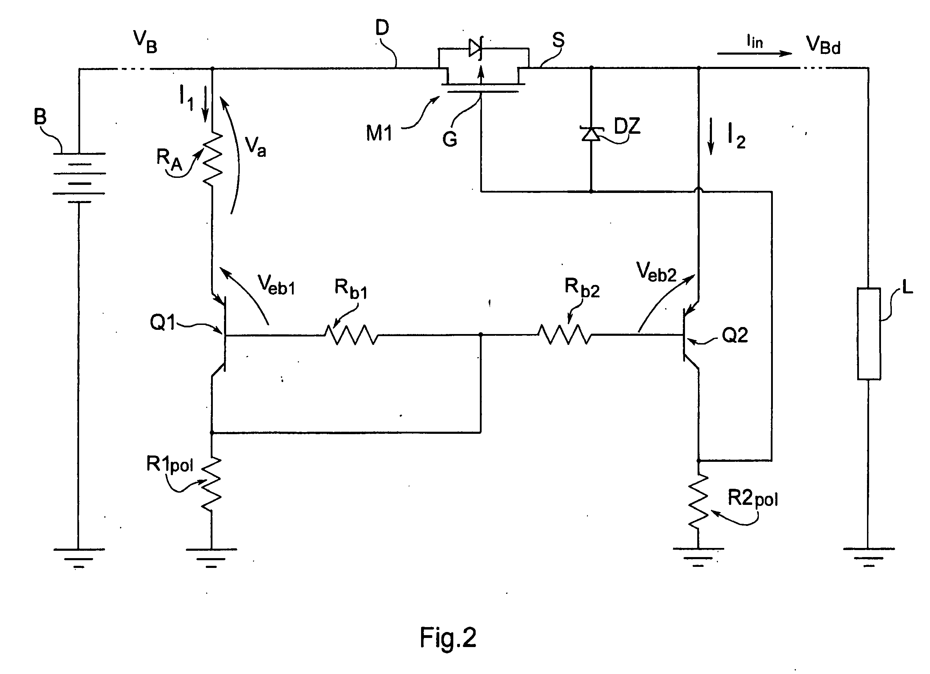

The protection circuit according to the invention, as an alternative to the traditional diode shown in Figure 1, is illustrated in Figure 2.

It comprises a p-channel MOSFET transistor M1 disposed in the supply line between the battery and the load, the drain terminal D of which is intended to be coupled to the battery B to receive a supply voltage $V_B$ and the source terminal S of which is intended to be coupled to the downstream circuits to provide them with a voltage $V_{Bd}$ of value about equal to $V_B$.

In the drawings there is also indicated the body diode apt to establish a current path between drain and source, and therefore between battery and load to be supplied, whilst presenting a high voltage drop across its terminals.

The gate terminal G of the transistor M1 is connected to a biasing circuit comprising a pair of bipolar p-n-p biasing transistors indicated Q1 and Q2, respectively belonging to a branch upstream and a branch downstream of M1, disposed between the supply line and ground.

The emitter of the first transistor Q1 is coupled to the drain terminal of the transistor M1 via an unbalancing resistor $R_A$ and the collector is coupled to ground through a biasing resistor $R1_{pol}$.

The emitter of the second transistor Q2 is directly coupled to the source terminal of the transistor M1 and the collector is coupled to ground through a respective biasing resistor $R2_{pol}$.

The bases of the two transistors Q1 and Q2 are coupled together and to the collector of the transistor Q1, whilst the collector of transistor Q2 is connected to the gate terminal of the transistor M1.

In a preferred embodiment, two current limitation resistors $R_{b1}$ and $R_{b2}$ are interposed between the bases of the transistors Q1 and Q2 and the connection node to the collector of Q1.

A zener diode DZ for voltage limitation is disposed between gate and source of the transistor M1.

Hereinafter in the description we will analyse the function of such a circuit in its functions of protection against polarity reversal of the battery and limitation of the discharge of the input capacitance of the downstream circuits for short supply interruptions. Specifically, we will describe the control of the gate-source biasing voltage of the MOSFET transistor M1 as a function of the anomalous conditions which can occur, demonstrating how the limitation of the current which flows through the MOSFET from source to drain upon polarity reversal takes place automatically. Consider the circuit diagram in its most simple version, neglecting the base resistors $R_{b1}$ and $R_{b2}$.

The conduction state of the MOSFET M1 is achieved by a voltage at gate $V_G$ less than the source voltage $V_S \approx V_B$. The body diode of the MOSFET allows a flow of current in the correct direction even in the case of insufficient gate biasing so that there is no channel formation.

Since the bipolar transistors Q1 and Q2 are formed in such a way as to have an electrical and thermal behaviour as similar as possible, for example because they are fabricated on the same chip or at least enclosed within the same casing, it is reasonable to assume as a simplified starting hypothesis that the respective voltage drops between emitter and base are about equal, so that:

$$V_{eb1} \approx V_{eb2}$$

By applying the second Kirchhoff law to the network formed by the MOSFET transistor M1, the unbalancing resistor $R_A$ and the bipolar transistors Q1 and Q2 one can therefore consider the voltage drop $V_{DS}$ across the terminals of the MOSFET along the supply line to be equal to the voltage drop which is established across the terminals of the unbalancing resistor $R_A$:

$$V_{DS} \approx V_A$$

This is true for supply currents $I_{in}$ less than a critical value, since, the MOSFET having a channel resistance $R_{DS}$, for high currents $I_{in}$, the voltage drop across the terminals of the channel calculated as

$$V_{DS} = R_{DS} \cdot I_{in}$$

will be on the same order of magnitude or greater, constituting a significant term with respect to the value $V_A$, and the preceding relation will no longer be true.

In reality, even though the biasing resistances of $R1_{pol}$ and $R2_{pol}$ are the same, the voltage drops between emitter and base are different, since the respective collector currents are different.

In fact, the collector current $I_1$ of the first transistor Q1 can be approximately calculated as:

$$I_1 \approx V_B/R1_{pol}$$

hypothesising that the resistance value $R_A$ is very much less than the resistance value $R1_{pol}$, whilst the collector current $I_2$ of the second transistor Q2, by virtue of the fact that the MOSFET M1 works linearly (saturation region) can be calculated as:

$$I_2 \approx (V_B - V_{SG})/R2_{pol}$$

or, analogously, by changing the references:

$$I_2 \approx V_G/R2_{pol}$$

and generally $V_G < V_B$ to allow the conduction of M1.

The result will be that $I_2 < I_1$ and consequently $V_{eb2} < V_{eb1}$. The differences between the emitter-base voltage drops of the two bipolar transistors are however of the order of 10 mV for the expected collector current differences and sum to the value of the voltage drop on the resistor $R_A$:

$$V_{DS} = V_A + \Delta V_{eb}$$

Finally, since the voltage drop across the terminals of the resistor $R_A$ is originated by the current $I_1$, in detail

$$I_1 = (V_B - V_{eb1})/R1_{pol}$$

one can conclude that the voltage drop across the terminals of the MOSFET transistor is a function of the supply voltage

$$V_{DS} = f(V_B)$$

and more precisely:

$$V_{DS} = V_A + \Delta V_{eb} = (V_B - V_{eb1}) \cdot R_A/R1_{pol} + \Delta V_{eb}$$

and, with a convenient choice of the resistance values of the components, is of the order of hundreds of mV. In a preferred embodiment of the invention the resistance value of $R_A$ is of the order of hundreds of ohms (for example 220Ω) whilst the resistance value of $R1_{pol}$ and $R2_{pol}$ is of the order of hundreds of kΩ (for example 100kΩ).

In polarity reversal conditions of the supply voltage the emitter-base junctions of Q1 and Q2 are reversed biased, the transistor Q2 is switched off and the voltage between gate and source of the MOSFET has a sign such as to switch off the transistor or maintain it switched off. In this condition the parasitic diode of the MOSFET itself opposes the flow of current.

Upon occurrence of a supply interruption condition the MOSFET transistor M1 is normally in conduction and it is necessary to absorb current from the gate to guarantee that the transistor is switched off rapidly and prevent the flow of current from the internal capacitances of the board towards external loads.

A current would tend to flow from the load towards the battery through a path which originates from the antiparallel diode of the internal load and includes the forward biased emitter-base junction of transistor Q2 and the reverse biased emitter-base junction of transistor Q1.

The resistor $R_A$ limits the value of this current, but this can be further limited by adding the base resistors $R_{b1}$ and $R_{b2}$ (for example with resistances of 10 kΩ).

A single resistor would be sufficient, but with a specular configuration it is possible also to compensate for the voltage drops across these resistors due to the respective base currents.

The gate current of the MOSFET transistor M1 is derived from the collector current of the transistor Q2, the magnitude of which depends on the voltage $V_{eb2}$ at the junction between emitter and base according to the relation:

$$V_{eb2} = V_{SD} + V_A + V_{eb1}$$

in which $V_{SD}$ is the positive voltage which is established between source and drain of M1 by virtue of the reversal of current.

The presence of the resistor $R_A$, and the establishment of a voltage $V_A \neq 0$ across its terminals allows an increase in the value of $V_{eb2}$, which otherwise would only be a function of the voltages $V_{eb1}$ and $V_{SD}$, this latter initially very low.

A greater value of voltage $V_{eb2}$ causes increase of the collector current $I_2$ of the transistor Q2 and therefore of the current drawn by the gate of the MOSFET so that switching of M1 from conduction to a turned off state occurs more rapidly. In this condition the gate is discharged linearly until reaching the zone of MOSFET linearity, and then starts a positive feedback upon increase of the voltage drop USD which still augments the biasing of Q2 and the rapidity of discharge of the gate.

Again, the base resistors $R_{b1}$ and $R_{b2}$ advantageously limit the current in the emitter-base junctions.

The value of the resistance of $R_A$ is chosen by balancing the requirements for rapid switching times of the MOSFET and low voltage drop across its terminals when working, as well as reduced heat dissipation of the protection circuit as a whole.

With the preferred values of the previously - indicated parameters response times in switching of the MOSFET of about $6\mu s$ are achieved.

Naturally, the principle of the invention remaining the same, the embodiments and details of construction can be widely varied with respect to what has been described and illustrated purely by way of non limitative example, without by this departing from the scope of protection defined in the annexed claims.

**Claims**

1. A protection circuit for protecting an electric circuit (L) from supply polarity reversal, operable to allow a flow of current from a DC supply voltage source (B) towards a circuit (L) and to prevent flow in the opposite sense, comprising a controlled electronic switch (M1) intended to be interposed in a supply line between a terminal of the said source (B) having a positive voltage with respect to a reference potential, and the circuit (L), and controllable to be selectively conductive by an associated driving circuit,
in which the said driving circuit is arranged to detect the polarity of the voltage and the sense of the current capable of being applied to the circuit (L) and to emit a control signal operable to drive the said switch (M1) to a conduction state when the terminal coupled to the supply line has indeed a positive voltage and the current is supplied to the circuit, and to a switched off state in a condition of polarity reversal and/or when the current is drawn from the circuit, the driving circuit further comprising a pair of branches disposed between the supply line and a reference potential conductor, respectively upstream and downstream of the said switch (M1), which include respective bipolar transistors (Q1, Q2) of p-n-p type, connected together via their respective bases and having their emitters coupled to the supply line and their collectors coupled to the reference conductor, in which the downstream branch is connected to a control terminal (G) of the said switch (M1)
**characterised in that** the circuit branch upstream of the switch (M1) includes an unbalancing resistor ($R_A$), disposed between the supply line and the emitter of the associated bipolar transistor (Q1).

2. A circuit according to Claim 1, **characterised in that** the controlled electronic switch (M1) is a p-channel field effect MOS transistor the drain terminal (D) of which is intended to be coupled to the source (B) of supply voltage and the source terminal (S) of which is intended to be coupled to the circuit (L).

3. A circuit according to Claim 1, in which the bipolar transistors (Q1, Q2) are formed on the same chip or disposed within the same heat dissipation casing.

4. A circuit according to Claim 1, **characterised in that** both branches include respective biasing resistors ($R1_{pol}$, $R2_{pol}$) disposed between the collector of the associated bipolar transistor (Q1, Q2) and the reference conductor.

5. A circuit according to Claim 1, **characterised in that** the value of the resistance of the unbalancing resistor ($R_A$) is at least two orders of magnitude less than the resistance values of the biasing resistors ($R1_{pol}$, $R2_{pol}$).

6. A circuit according to any of the preceding claims, **characterised in that** the driving circuit includes at least one base resistor ($R_{b1}$; $R_{b2}$) disposed between the bases of the bipolar transistors (Q1, Q2).

7. A circuit according to Claim 6, in which the driving circuit includes two base resistors ($R_{b1}$, $R_{b2}$) of the same resistance.

8. A circuit according to Claim 2, **characterised in that** it includes voltage limiting means (DZ) disposed between the control terminal (G) and the source terminal (S) of the switch (M1).

9. A circuit according to Claim 8, **characterised in that** the said voltage limiting means comprise a zener diode (DZ).

**Patentansprüche**

1. Schutzschaltung zum Schützen einer elektrischen Schaltung (L) gegenüber einer Versorgungspolaritätsumkehr, die betreibbar ist, um einen Stromfluss von einer Gleichspannungsversorgungsquelle (B) zu einer Schaltung (L) zuzulassen und um den Fluss in der entgegengesetzten Richtung zu verhindern, mit einem gesteuerten elektronischen Schalter (M1), der in eine Versorgungsleitung zwischen einem Anschluss der Quelle (B), der in Bezug auf ein Referenzpotential eine positive Spannung hat, und der Schaltung (L) eingesetzt werden soll und durch eine zugeordnete Ansteuerungsschaltung steuerbar ist, um wahlweise leitend zu sein,

wobei die Ansteuerungsschaltung dazu ausgelegt ist, die Polarität der Spannung und die Richtung des Stroms zu detektieren, die an die Schaltung (L) angelegt bzw. in sie eingegeben werden können, und ein Steuersignal auszugeben, das in der Lage ist, dann, wenn der mit der Versorgungsleitung gekoppelte Anschluss tatsächlich eine positive Spannung hat und der Strom der Schaltung zugeführt wird, den Schalter (M1) in einen leitenden Zustand anzusteuern, und in einem Zustand mit Polaritätsumkehr und/oder dann, wenn Strom aus der Schaltung gezogen wird, in einen ausgeschalteten Zustand anzusteuern,

wobei die Ansteuerungsschaltung ferner zwei Zweige umfasst, die zwischen der Versorgungsleitung und einem Referenzpotential-Leiter stromaufseitig bzw. stromabseitig des Schalters (M1) angeordnet sind und entsprechende Bipolartransistoren (Q1, Q2) des pnp-Typs enthalten, die über ihre jeweiligen Basen miteinander verbunden sind und deren Emitter mit der Versorgungsleitung gekoppelt sind und deren Kollektoren mit dem Referenzleiter gekoppelt sind, wobei der stromabseitige Zweig mit einem Steueranschluss (G) des Schalters (M1) verbunden ist, **dadurch gekennzeichnet, dass** der Schaltungszweig stromaufseitig des Schalters (M1) einen nicht ausgeglichenen Widerstand ($R_A$) aufweist, der zwischen der Versorgungsleitung und dem Emitter des zugeordneten Bipolartransistors (Q1) angeordnet ist.

2. Schaltung nach Anspruch 1, **dadurch gekennzeichnet, dass** der gesteuerte elektronische Schalter (M1) ein p-Kanal-Feldeffekttransistor, PMOS-Transistor, ist, dessen Drain-Anschluss (D) mit der Quelle (B) der Versorgungsspannung gekoppelt werden soll und dessen Source-Anschluss (S) mit der Schaltung (L) gekoppelt werden soll.

3. Schaltung nach Anspruch 1, wobei die Bipolartransistoren (Q1, Q2) auf demselben Chip ausgebildet sind oder im selben Wärmeableitungsgehäuse angeordnet sind.

4. Schaltung nach Anspruch 1, **dadurch gekennzeichnet, dass** beide Zweige jeweilige Vorspannungswiderstände ($R1_{pol}$, $R2_{pol}$) aufweisen, die zwischen dem Kollektor des zugeordneten Bipolartransistors (Q1, Q2) und dem Referenzleiter angeordnet sind.

5. Schaltung nach Anspruch 1, **dadurch gekennzeichnet, dass** der Widerstandswert des nicht ausgeglichenen Widerstands ($R_A$) um wenigstens zwei Größenordnungen geringer ist als die Widerstandswerte der Vorspannungswiderstände ($R1_{pol}$, $R2_{pol}$).

6. Schaltung nach einem der vorhergehenden Ansprüche, **dadurch gekennzeichnet, dass** die Ansteuerungsschaltung wenigstens einen Basiswiderstand ($R_{b1}$; $R_{b2}$) enthält, der zwischen den Basen der Bipolartransistoren (Q1, Q2) angeordnet ist.

7. Schaltung nach Anspruch 6, wobei die Ansteuerungsschaltung zwei Basiswiderstände ($R_{b1}$, $R_{b2}$) mit demselben Widerstandswert enthält.

8. Schaltung nach Anspruch 2, **dadurch gekennzeichnet, dass** sie Spannungsbegrenzungsmittel (DZ) enthält, die zwischen dem Steueranschluss (G) und dem Quellenanschluss (S) des Schalters (M1) angeordnet sind.

9. Schaltung nach Anspruch 8, **dadurch gekennzeichnet, dass** die Spannungsbegrenzungsmittel eine Zener-Diode (DZ) umfassen.

**Revendications**

1. Circuit de protection pour la protection d'un circuit électrique (L) contre l'inversion de la polarité de l'alimentation, apte à être mis en oeuvre pour admettre un passage de courant d'une source de tension d'alimentation en courant continu (B) vers le circuit (L) et pour empêcher le passage dans le sens opposé, comprenant un commutateur électronique commandé (M1) destiné à être interposé dans une ligne d'alimentation entre un terminal de ladite source (B) ayant une tension positive par rapport à un potentiel de référence, et le circuit (L), et apte à être commandé pour être sélectivement conducteur par un circuit d'excitation associé,

dans lequel ledit circuit d'excitation est agencé pour détecter la polarité de la tension et le sens du courant capable d'être appliqué au circuit (L) et pour émettre un signal de commande apte à être mis en oeuvre pour amener ledit commutateur (M1) à un état de conduction lorsque le terminal couplé à la ligne d'alimentation a effectivement une tension positive et que le courant est fourni au circuit, et à un état de coupure dans un état d'inversion de polarité et/ou lorsque le courant est prélevé du circuit,

le circuit d'excitation comprenant en outre une paire de branches disposées entre la ligne d'alimentation et un conducteur de potentiel de référence, respectivement en amont et en aval dudit commutateur (M1), qui comportent des transistors bipolaires respectifs (Q1, Q2) de type p-n-p, reliés entre eux via leurs bases respectives et ayant leurs émetteurs couplés à la ligne d'alimentation et leurs collecteurs couplés au conducteur de référence, tandis que la branche aval est reliée à un terminal de commande (G) dudit commutateur (M1),

**caractérisé en ce que** la branche de circuit en amont du commutateur (M1) comporte une résistance de rupture d'équilibre ($R_A$), disposée entre la ligne d'alimentation et l'émetteur du transistor bipolaire associé (Q1).

2. Circuit selon la revendication 1, **caractérisé en ce que** le commutateur électronique commandé (M1) est un transistor MOS à effet de champ à canal p dont la borne de drain (D) est destinée à être couplée à la source (B) de tension d'alimentation et dont la borne de source (S) est destinée à être couplée au circuit (L).

3. Circuit selon la revendication 1, dans lequel les transistors bipolaires (Q1, Q2) sont formés sur la même puce ou disposés dans le même boîtier de dissipation de chaleur.

4. Circuit selon la revendication 1, **caractérisé en ce que** les deux branches comportent des résistances de polarisation respectives ($R1_{pol}$, $R2_{pol}$) disposées entre le collecteur du transistor bipolaire associé (Q1, Q2) et le conducteur de référence.

5. Circuit selon la revendication 1, **caractérisé en ce que** la valeur de résistance de la résistance de déséquilibre ($R_A$) est au moins de deux ordres de grandeur inférieure aux valeurs de résistance des résistances de polarisation ($R1_{pol}$, $R2_{pol}$).

6. Circuit selon l'une quelconque des revendications précédentes, **caractérisé en ce que** le circuit d'excitation comporte au moins une résistance de base ($R_{b1}$, $R_{b2}$) disposée entre les bases des transistors bipolaires (Q1, Q2).

7. Circuit selon la revendication 6, dans lequel le circuit d'excitation comporte deux résistances de base ($R_{b1}$, $R_{b2}$) ayant la même résistance.

8. Circuit selon la revendication 2, **caractérisé en ce qu'**il comporte des moyens de limitation de la tension (DZ) disposés entre le terminal de commande (G) et le terminal source (S) du commutateur (M1).

9. Circuit selon la revendication, 8, **caractérisé en ce que** lesdits moyens de limitation de la tension comprennent une diode de Zener (DZ).

Fig.1

Fig.2

**EP 1 401 077 B1**

**REFERENCES CITED IN THE DESCRIPTION**

**Patent documents cited in the description**

- US 5764465 A